# EUROPEAN PATENT SPECIFICATION

(11) **EP 2 601 394 B1**
(45) Date of publication and mention of the grant of the patent: **08.10.2014**
(21) Application number: 11752327.4
(22) Date of filing: 04.08.2011
(51) Int. Cl.: F02C 6/18, F02C 7/18, F02C 6/00

(54) **GAS TURBINE APPARATUS WITH IMPROVED EXERGY RECOVERY**
GASTURBINE MIT VERBESSERTER ENERGIERÜCKGEWINNUNG
APPAREIL DE TURBINE À GAZ PRÉSENTANT UNE MEILLEURE FONCTION DE RÉCUPÉRATION D'ÉXERGIE

(30) Priority: 04.08.2010 GB 201013061
(43) Date of publication of application: 12.06.2013
(73) Proprietor: Combined Cycle Enhancements Limited, Middlesbrough, Cleveland TS5 8HL (GB)
(72) Inventor: NEILL, Iain, Stockton-on-Tees Cleveland TS15 9RA (GB); WATSON, Darren, Leeds Yorkshire LS17 0HA (GB)
(74) Representative: Olbrich, Thomas
(86) International application number: PCT/GB2011/051480
(87) International publication number: WO 2012/017247

(56) References cited:
- EP-A2- 1 249 581
- JP-A- 10 196 316
- JP-A- 11 182 263
- JP-A- 55 012 278
- JP-A- 2001 214 758

## Description

The present invention relates to gas turbines and in particular to gas turbines with an improved heat exchanger assembly for recovering exergy in a gas turbine.

### INTRODUCTION

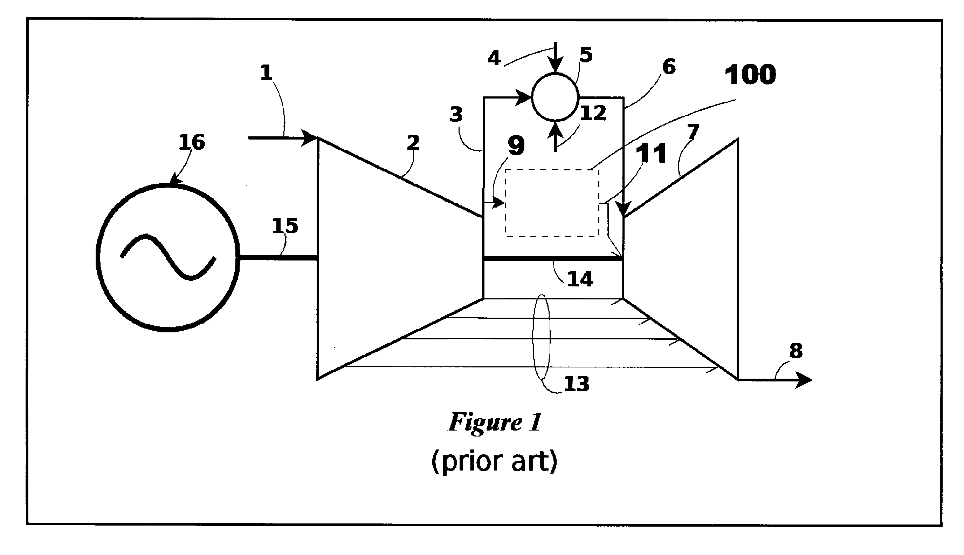

A gas turbine, also called combustion turbine, is an engine that creates a flow of combusted gas and extracts energy or power from it. With reference to Figure 1, a typical gas turbine has an upstream compressor **2** that is coupled to a downstream turbine **7** and a combustion chamber **5** disposed in-between. Energy is added to a compressed air stream **3** in the combustor **5,** where fuel is mixed with air **4** and ignited. In the high pressure environment of the combustor **5,** combustion of the fuel produces high temperature gas **6** which is forced into the turbine section **7.** There, the hot gas flow is directed over the turbine's blades, spinning the turbine **7** which powers the compressor **2** and generator **16** via a shaft **14.** Various gas turbine designs pass some of the compressed air stream **9** through external heat exchangers **100** to cool the air before it is introduced into the portions of the gas combustor or turbine hot section for cooling and other purposes.

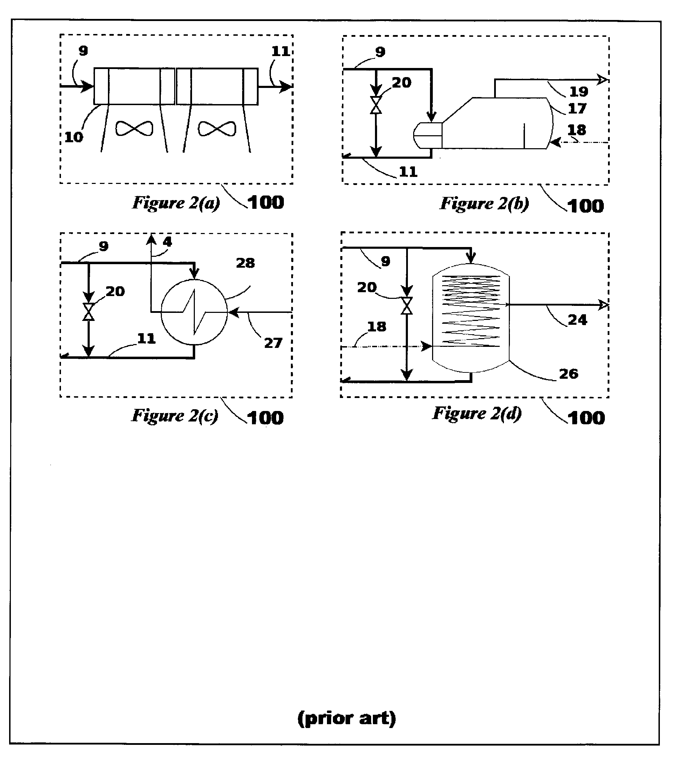

In the present state of the art, the heat extracted from cooling the compressed air is either discharged to atmosphere or utilized in order to produce steam from water or used to heat the fuel for the combustion process via a fuel heater. Typical examples for a cooling system **100** areshown in Figures 2(a) to (d), where the compressed air is either cooled by an air-to-air cooler **10** (see Figure 2(a)), or the energy extracted from the compressed air is utilized in, for example, a kettle boiler **17** (see Figure 2(b)), or a steam generator **26** (see Figure 2(d)). A fuel heater **28,** as shown in Figure 2(c), may also be used to pre-heat the fuel for the combustion chamber in order to improve the thermal efficiency of the gas turbine. In the case as shown in Figure 2(c), heat is extracted from the compressed air **9** and fed, carried by the fuel, into the combustion chamber **5.** However, depending on how the fuel and air cycles match, the thermal capacity of the fuel combined with limits on maximum fuel temperature can often restrict the proportion of the heat which can be transferred to the fuel, therefore wasting the benefit of an amount of the energy carried by the cooling air. In many practical applications, other sources of waste heat are also available which are better matched to heating fuel and if used will provide an advantage in minimizing the exergy destruction of the overall system.

In thermodynamics, the exergy of a medium can be defined as the maximum useful work possible during a process that brings the system into equilibrium with a heat reservoir. Exergy destruction is therefore a decrease in the maximum useful work available to be converted from heat to work elsewhere in the process and loss of efficiency in the overall heat to work conversion process.

In the case of the air cooler in Figure 2(a), all exergy in the compressed air is destroyed by the exchanger **25** leading to a loss of efficiency in the overall system. In the case of the kettle boiler **17** in Figure 2(b) a substantial amount of exergy is destroyed in the heat exchange process as steam is generated from water by evaporation at constant pressure and temperature, thus having a low mean temperature of heat addition and low resultant exergy. The use of a steam generator **26** in Figure 2(d) is only a slight improvement on the kettle boiler **17** and still destroys an important amount of exergy.

JP2001214758, for example, describes a gas turbine where temperature control is improved by adding a downstream water heater to the air stream while utilizing an upstream kettle boiler. However, the use of a water heater and/or kettle boiler in this configuration always decreases the exergy of the system.

Accordingly, it is an object of the present invention to minimize the exergy destruction and therefore allow a larger proportion of the exergy in the compressed air to be transferred to the cooling medium in order to be converted to work or used as an energy source elsewhere in the process, while maintaining the function of temperature control of the compressed air stream.

### SUMMARY OF THE INVENTION

Preferred embodiments of the invention seek to overcome one or more of the above disadvantages of the prior art.

According to a first aspect of the present invention, there is provided a gas turbine apparatus comprising:
a compressor adapted to compress air;
a combustion chamber, disposed downstream of said compressor and adapted to receive and combust a first portion of said compressed air;
a turbine, disposed downstream of said combustion chamber and adapted to receive and perform work from said combusted and compressed air;
a heat exchanger system comprising a cooler, disposed parallel to said combustion chamber, downstream of said compressor and upstream of said gas turbine, adapted to receive and cool at least a second portion of said compressed air and provide said cooled compressed air to at least one thermally loaded part of said gas turbine, and
further comprising at least one super-heater assembly, disposed downstream of said compressor and upstream of said cooler, adapted to extract and transfer energy from said compressed air to said combustion chamber and/or said turbine and/or an auxiliary energy recovering system, utilizing at least one auxiliary working medium adapted to transfer said energy.

This provides the advantage that, compared to all forms of existing art, the present invention allows a larger proportion of the exergy in the compressed air to be transferred to the cooling medium in order to be converted to work or used as an energy source elsewhere in the process, while maintaining the function of temperature control of the compressed air stream.

The super-heater assembly may extract at least half (50%) of the total energy transferred by said second portion of said compressed air. Advantageously, at least 50% of the heat captured from the compressed air may be captured as sensible heat in the working medium. Here, sensible heat is defined as heat energy of a material that is related to a change in temperature without a change in state. Preferably, at least 60% of the heat captured from the compressed air may be captured as sensible heat in the steam and/or fuel. More preferably, at least 70% of the heat captured from the compressed air may be captured as sensible heat in the steam and/or fuel. Even more preferably, at least 80% of the heat captured from the compressed air may be captured as sensible heat in the steam and/or fuel. Even more preferably, at least 90% of the heat captured from the compressed air may be captured as sensible heat in the steam and/or fuel, and even more preferably, 100% of the heat captured from the compressed air may be captured as sensible heat in the steam and/or fuel. This provides the advantage that all of the energy removed from the compressed air that is recovered to a working medium, is transferred with maximum exergetic efficiency. For example, the apparatus may be adapted to use the compressed air to pre-heat (super-heat) steam to a predetermined temperature and then used for super-heating fuel and/or generating steam from water for use in the gas turbine or alternative energy conversion systems. The apparatus may also be used for super-heating steam, followed by heating water to an optimal temperature. The super-heated steam output of the exchanger may be used as input for steam injection into the combustion chamber, or alternatively into a steam turbine or any other plant or process that uses steam to generate electrical power or for other uses.

The heat-exchanger assembly may comprise a plurality of super-heaters arranged in a series configuration, each of said plurality of super-heaters utilizing said at least one auxiliary working medium at pressures and temperatures which are optimized for maximum exergy capture.

Any one of said plurality of super-heater disposed upstream of any one of the other said plurality of super-heater may be adapted to receive said at least one auxiliary working medium from at least one of the other said plurality of super-heaters.

The gas turbine apparatus may further comprise a fuel-heater disposed upstream or downstream of said super-heater assembly and adapted to extract heat from said second portion of said compressed air for heating fuel of said combustion chamber. The heat exchanger may be either one of an air cooler, a boiler, a steam generator or any combination thereof. Whether stand-alone or integrated into a combined cycle or other process. This provides the advantage of maximising the exergetic efficiency of the gas turbine apparatus and related processes.

The auxiliary working medium may be steam, saturated steam, water or fuel. This provides the advantage that a commonly available working medium is used.

### BRIEF DESCRIPTION OF THE DRAWINGS

A preferred embodiment of the present invention will now be described, by way of example only and not in any limitative sense, with reference to the accompanying drawings, in which:
**Figure 1** shows a schematic diagram of a typical combustion gas turbine including a compressor, combustor, turbine and cooler arrangement,
**Figure 2(a) to (d)** shows detailed schematic diagrams of various examples for the cooler arrangement of Figure 1, including (a) an air-to-air cooler, (b) a kettle boiler, (c) a fuel heater, and (d) a steam generator;
**Figure 3** shows a schematic diagram of a cooler arrangement of a first embodiment of the present invention including a super-heater and an air-to-air cooler or alternative heat exchanger,
**Figure 4** shows a schematic diagram of a cooler arrangement of a third embodiment of the present invention including two super-heaters arranged in series and a kettle boiler or alternative heat exchanger

### DETAILED DESCRIPTION OF EMBODIMENTS

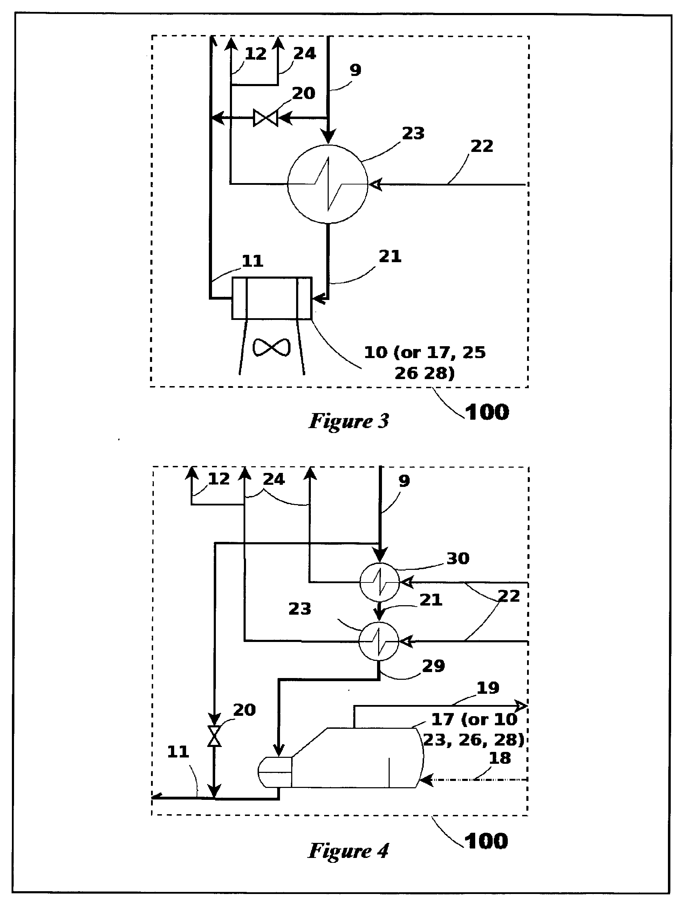

Referring to Figure 3, an example of a first embodiment of the invention is disclosed showing only the gas turbine cooling system according to the gas turbine apparatus disclosed in Figure 1. The first embodiment of the present invention includes a super-heater stage, comprising a heat exchanger **23** in form of a super-heater, upstream of a temperature control stage, comprising an air-to-air cooler **10.** A portion of the compressed air **9** is extracted from the compressor **2** and cooled via heat exchanger **23.** The heat exchanger **23** provides its own working medium **22** and may be a shell and tube tube-sheet type, a shell and tube header type, a plate heat exchanger, a compact exchanger or any other heat exchanger adapted to cool the compressed air. The working medium **22** could be saturated steam, but any other working medium such as air, super-heated steam, fuel or any other fluid may be used. In operation, the steam **22** is heated by the high-temperature compressed air **9** in the heat exchanger **23** producing a super-heated steam that is discharged via stream **12** to, for example, the combustor **5** and/or via stream **24** to other energy recovering equipment where the heat is converted into other forms of energy. The super-heated steam discharged through stream **12** may also be used for cooling thermally loaded parts of the turbine **7,** for chemical processes, or fed back into the turbine **5.** Cooled compressed air **21** is then discharged from the heat exchanger **23** of the super-heater-stage and fed into an air-to-air cooler **10.** The air-to-air cooler **10** provides further cooling of the discharged compressed air **21** and allows temperature control of the cooled air temperature. Instead of the air-to-air cooler **10,** any other suitable heat exchanger, such as a boiler **17** or a super-heater **23** or a water heater **25** or a steam generator **26,** a fuel heater **28** or a heater with an alternative working medium may be used.

The type of equipment to be utilised is similar to the prior art, however, the compressed air when it is being cooled in the final heat exchanger device has a lower exergy content than in the prior art which provides the advantage that the exergy is transferred with higher effectiveness. Therefore, this final heat exchanger maintains the temperature control of the cooled air over the entire operating range of the gas turbine.

In an alternative embodiment, as shown in Figure 4, at least two heat-exchangers **23** in form of super-heaters are arranged in a series configuration each of the heat-exchangers **23** optionally operating at a different pressures and/or temperatures of the working medium **22.** In this particular example, the incoming compressed air **9** streams to the first super-heater **23** then to the second super-heater, downstream from the first super-heater. The discharged super-heated steam is used for other equipment on, for example, a plant via streams **24.** Optionally, the discharged super-heated steam is used for steam injection to the combustor **5** via stream **12.** Here, the steam streams **12** and **24** are suitably used according to the plant requirements. The boiler **17** provides further cooling of the discharged compressed air **21** and allows temperature control of the cooled air temperature. Instead of the boiler **17,** any other suitable heat exchanger, such as a air-to-air cooler **10** or another super-heater **23** or a steam generator **26** or a water heater **25,** a fuel heater 28 or a heater with an alternative working medium may be used.

The examples disclosed in Figures 3 and 4 illustrate typical combinations of the cooling system **100** of the gas turbine apparatus of the present invention with single or multi-stage super-heater devices, where each stage may be one or more heat exchangers of any suitable type comprising any suitable known device for air temperature control.

It will be appreciated by persons skilled in the art that the above embodiment has been described by way of example only and not in any limitative sense, and that various alterations and modifications are possible without departing from the scope of the invention as defined by the appended claims.

## Claims

1. A gas turbine apparatus comprising:
a compressor (2) adapted to compress air;
a combustion chamber (5), disposed downstream of said compressor and adapted to receive and combust a first portion of said compressed air;
a turbine (5), disposed downstream of said combustion chamber and adapted to receive and perform work from said combusted and compressed air;
a heat exchanger system comprising a cooler (10), disposed parallel to said combustion chamber, downstream of said compressor and upstream of said gas turbine, adapted to receive and cool at least a second portion of said compressed air and provide said cooled compressed air to at least one thermally loaded part of said gas turbine, and **characterized in**
further comprising at least one super-heater assembly (23), disposed downstream of said compressor and upstream of said cooler, adapted to extract and transfer energy from said compressed air to said combustion chamber and/or said turbine and/or an auxiliary energy recovering system, utilizing at least one auxiliary working medium (22) adapted to transfer said energy.

2. The gas turbine apparatus according to claim 1, further adapted to capture at least half of the total energy transferred by said second portion of said compressed air as sensible heat in said at least one auxiliary working medium.

3. The gas turbine apparatus of any one of claims 1 and 2, wherein said super-heater assembly comprises a plurality of super-heaters arranged in a series configuration, each of said plurality of super-heaters utilizing said at least one auxiliary working medium at a different pressure and temperature.

4. The gas turbine apparatus of any one of the previous claims, further comprising a fuel-heater disposed upstream of said super-heater assembly and adapted to extract heat from said second portion of said compressed air for heating fuel of said combustion chamber.

5. The gas turbine apparatus of any one of the previous claims,
wherein said heat exchanger is either one of an air cooler, a kettle boiler, a steam generator or any combination thereof.

6. The gas turbine apparatus of any one of the previous claims, wherein said auxiliary working medium is saturated steam.

## Patentansprüche

1. Eine Gasturbinenvorrichtung, die Folgendes beinhaltet:
einen Kompressor (2), der angepasst ist, um Luft zu komprimieren;
eine Verbrennungskammer (5), die unterhalb des Kompressors angeordnet ist und
angepasst ist, um einen ersten Anteil der komprimierten Luft aufzunehmen und zu verbrennen;
eine Turbine (7), die unterhalb der Verbrennungskammer angeordnet ist und angepasst ist, um Arbeit von der verbrannten und komprimierten Luft aufzunehmen und
durchzuführen;
ein Wärmeaustauschersystem, das einen Kühler (10), angeordnet parallel zu der Verbrennungskammer, unterhalb des Kompressors und oberhalb der Gasturbine, beinhaltet, angepasst, um mindestens einen zweiten Anteil der komprimierten Luft aufzunehmen und zu kühlen und die gekühlte komprimierte Luft mindestens einem Wärmeteil der Gasturbine bereitzustellen, und **dadurch gekennzeichnet, dass** sie ferner mindestens eine Überhitzeranordnung (23) beinhaltet, die unterhalb des Kompressors und oberhalb des Kühlers angeordnet ist, die angepasst ist, um Energie aus der komprimierten Luft zu extrahieren und an die Verbrennungskammer und/oder die Turbine und/oder ein Zusatzenergieverwertungssystem zu übertragen, die mindestens ein Hilfsarbeitsmedium (22) benutzt, das angepasst ist, um die Energie zu übertragen.

2. Gasturbinenvorrichtung gemäß Anspruch 1, die ferner angepasst ist, um mindestens die Hälfte der Gesamtenergie, die durch den zweiten Anteil der komprimierten Luft als Eigenwärme in dem mindestens einen Hilfsarbeitsmedium übertragen wird, zu erfassen.

3. Gasturbinenvorrichtung gemäß einem der Ansprüche 1 und 2, wobei die Überhitzeranordnung eine Vielzahl von in einer Reihenkonfiguration arrangierten Überhitzern beinhaltet, wobei jeder der Vielzahl von Überhitzern das mindestens eine Hilfsarbeitsmedium bei einem unterschiedlichen Druck und einer unterschiedlichen Temperatur benutzt.

4. Gasturbinenvorrichtung gemäß einem der vorhergehenden Ansprüche, die ferner eine oberhalb der Überhitzeranordnung angeordnete Kraftstoffheizung beinhaltet und angepasst ist, um Hitze von dem zweiten Anteil der komprimierten Luft zum Erhitzen von Kraftstoff der Verbrennungskammer zu extrahieren.

5. Gasturbinenvorrichtung gemäß einem der vorhergehenden Ansprüche, wobei der Wärmeaustauscher ein Luftkühler, ein Kesselboiler, ein Dampfgenerator oder eine beliebige Kombination davon ist.

6. Gasturbinenvorrichtung gemäß einem der vorhergehenden Ansprüche, wobei das Hilfsarbeitsmedium gesättigter Dampf ist.

## Revendications

1. Un appareil formant turbine à gaz comprenant :
un compresseur (2) conçu pour comprimer de l'air ;
une chambre de combustion (5), disposée en aval dudit compresseur et conçue pour recevoir et brûler une première portion dudit air comprimé ;
une turbine (7), disposée en aval de ladite chambre de combustion et conçue pour recevoir ledit air brûlé et comprimé et réaliser un travail à partir de celui-ci ;
un système à échangeur de chaleur comprenant un refroidisseur (10), disposé parallèlement à ladite chambre de combustion, en aval dudit compresseur et en amont de ladite turbine à gaz, conçu pour recevoir et refroidir au moins une deuxième portion dudit air comprimé et fournir ledit air comprimé refroidi à au moins une partie thermiquement chargée de ladite turbine à gaz, et **caractérisé par le fait qu'**il comprend de surcroît au moins un assemblage à surchauffeurs (23), disposé en aval dudit compresseur et en amont dudit refroidisseur, conçu pour extraire et
transférer de l'énergie dudit air comprimé à ladite chambre de combustion et/ou ladite turbine et/ou un système de récupération d'énergie auxiliaire, utilisant au moins un milieu de travail auxiliaire (22) conçu pour transférer ladite énergie.

2. L'appareil formant turbine à gaz selon la revendication 1, conçu de surcroît pour capturer au moins la moitié de l'énergie totale transférée par ladite deuxième portion dudit air comprimé sous forme de chaleur sensible dans ledit au moins un milieu de travail auxiliaire.

3. L'appareil formant turbine à gaz de l'une quelconque des revendications 1 et 2, dans lequel ledit assemblage à surchauffeurs comprend une pluralité de surchauffeurs arrangés en une configuration en série, chaque surchauffeur de ladite pluralité de surchauffeurs utilisant ledit au moins un milieu de travail auxiliaire à des pression et température différentes.

4. L'appareil formant turbine à gaz de l'une quelconque des revendications précédentes, comprenant de surcroît un réchauffeur de combustible disposé en amont dudit assemblage à surchauffeurs et conçu pour extraire de la chaleur de ladite deuxième portion dudit air comprimé pour chauffer du combustible de ladite chambre de combustion.

5. L'appareil formant turbine à gaz de l'une quelconque des revendications précédentes, dans lequel ledit échangeur de chaleur est soit un refroidisseur d'air, soit une chaudière de type bouilleur, soit un générateur de vapeur, soit n'importe quelle combinaison de ceux-ci.

6. L'appareil formant turbine à gaz de l'une quelconque des revendications précédentes, dans lequel ledit milieu de travail auxiliaire est de la vapeur saturée.
